# FASCICULE DE BREVET EUROPEEN

(11) **EP 2 807 129 B1**
(45) Date de publication et mention de la délivrance du brevet: **30.10.2019**
(21) Numéro de dépôt: 13701272.0
(22) Date de dépôt: 25.01.2013
(51) Int. Cl.: C04B 24/26, C08F 8/28, C08F 16/06, C08J 3/24, C08K 5/07, C09K 8/12, C09K 8/487, C09K 8/62

(54) **AGENTS DE CONTRÔLE DU FILTRAT SOUS FORME SOLIDE**
FILTRATKONTROLLMITTEL IN FESTER FORM
FILTRATE CONTROL AGENTS IN SOLID FORM

(30) Priorité: 25.01.2012 FR 1200215
(43) Date de publication de la demande: 03.12.2014
(73) Titulaire: Rhodia Opérations, 75009 Paris (FR)
(72) Inventeur: CADIX, Arnaud, 93400 Saint-Ouen (FR)
(74) Mandataire: Cordier, Pascal Christian
(86) Numéro de dépôt international: PCT/EP2013/051461
(87) Numéro de publication internationale: WO 2013/110773

(56) Documents cités:
- BE-A- 657 268
- FR-A1- 2 704 219
- FR-A1- 2 759 364
- US-A- 3 408 429

## Description

La présente invention a trait au domaine de l'extraction pétrolière. Il concerne en particulier des agents de contrôle du filtrat dans des fluides injectés sous pression qui comprennent des constituants insolubles.

Dans le domaine de l'extraction pétrolière, de nombreuses étapes sont conduites un injectant des fluides sous pression au sein de roches pétrolières. C'est en particulier le cas lors de l'injection de fluides de forage ou de fluides de fracturation. Un autre cas plus spécifique est celui des coulis de ciment pétrolier, qui sont employés pour la cimentation de l'annulaire des puits pétroliers selon une méthode bien connue en soi, décrite par exemple dans Le Forage par J.P Nguyen (Editions technip 1993). Ces coulis de ciment pétroliers sont injectés sous pression dans l'intérieur d'un tubage métallique (cuvelage) introduit dans le trou de forage des puits de pétrole puis remontent, sous l'effet de la pression par l'espace dit « annulaire » (« annulus » en anglais) situé entre le cuvelage et le trou de forage puis prennent et durcissent dans cet annulaire, assurant ainsi la stabilité du puits en cours de forage..

Lorsque ces fluides employés sous pression contiennent des composés insolubles (comme c'est le cas des coulis de ciment pétrolier par exemple ou bien de fluides de forages comprenant des polymères), la mise en contact du fluide sous pression et de la roche (qui présente le plus souvent une porosité plus ou moins élevée, voire des fissures) induit un effet dit de « perte de fluide » ou « filtrat » (« fluid loss » en anglais), le liquide présent dans le fluide ayant une tendance à pénétrer dans la roche, induisant ainsi un effet de concentration du fluide, ce qui peut conduire à une augmentation conjointe de viscosité affectant la mobilité du fluide. Dans le cas de coulis de ciment, la perte de fluide peut en outre induire une prise trop rapide du ciment, avant que l'espace de l'annulaire soit cimenté, ce qui peut notamment fragiliser la structure du puits et nuire à son étanchéité. Pour plus de détails concernant l'effet de perte de fluide, on pourra notamment se reporter à Weil Cementing, E.B. Nelson (Elsevier, 1990).

Pour inhiber, voire éviter, le phénomène de perte de fluide, il est préconisé d'ajouter aux fluides du type précités des additifs dits « *agents de contrôle du filtrat* » qui permettent de limiter, voir d'empêcher totalement dans certains cas, la fuite du liquide présent dans le fluide vers la roche avec laquelle il entre en contact. Ces agents de contrôle du filtrat (« *fluid loss control agents* » en anglais) permettent en général d'obtenir, en parallèle, un effet de contrôle de la migration de gaz, à savoir une isolation du fluide vis-à-vis des gaz contenu dans la roche (gaz dont il convient d'éviter qu'il ne penètrent le fluide notamment dans le cas de coulis de ciment, ces gaz ayant tendance à fragiliser le ciment en formation (en cours de prise).

Divers agents de contrôle du filtrat du type précité ont été proposés, qui incluent notamment des dérivés cellulosiques (hydroxyéthylcellulose, par exemple) ou bien encore des copolymères à base d'AMPS.

Dans le domaine des coulis de ciment pétrolier, des additifs préconisés sont les alcools polyvinyliques, souvent désignés par leur acronyme anglais « PVA », qui présentent l'avantage de ne pas retarder la prise du ciment, contrairement à d'autres additifs, comme l'hydroxyéthylcellulose par exemple. Ces PVA ont été employés sous différentes formes, notamment sous forme de polymères linéaires ou bien, plus avantageusement, sous la forme réticulée, formant des microgels en milieu aqueux. Pour plus de détails à ce sujet, on pourra notamment se reporter aux demandes de brevet FR2704219 ou FR2759364. Les procédés de synthèse décrits pour ces polymères se font généralement en milieu aqueux et conduisent à la formation de solutions ou microgels dilués, en particulier dans le cas des PVA réticulés.

L'obtention des microgels de PVA sous une forme diluée dans une grande quantité d'eau pose des difficultés en termes de volume (notamment pour ce qui est de leur stockage et leur transport), voire en termes de formulation (si on souhaite intégrer ces PVA à concentration élevée, par exemple). En outre, les solutions diluées de PVA sont sensibles au gel et ne peuvent donc pas être employées en cas de gel. Dans certains cas, ces problèmes peuvent être résolus en éliminant tout ou partie du solvant, mais cela s'accompagne alors d'un surcoût important pour la fabrication du produit.

Un but de la présente invention est de fournir une nouvelle voie d'accès intéressante à des PVA réticulés ou à des molécules similaires, utiles notamment à titre d'agent de contrôle du filtrat, qui ne présente pas les inconvénients des procédés actuellement connus.

A cet effet, la présente invention propose un nouveau procédé de fabrication de composés réticulés utiles, entre autres, à titre d'agent de contrôle du filtrat, et qui permet d'obtenir ces composés sous une forme solide.

Plus précisément, la présente invention a pour objet un procédé de préparation d'un agent de contrôle du filtrat, sous forme solide, ledit procédé comprenant une étape (E1) où on fait réagir :
- un polymère porteur de plusieurs fonctions hydroxyle (-OH) et /ou amine et/ou amide, sous forme d'un solide divisé
   avec
- au moins un agent réticulant porteur d'au moins deux groupements -R capable de réagir avec les groupes -OH, amine ou amide dudit polymère dans les conditions de l'étape (E1) pour former une liaison covalente entre le polymère et l'agent réticulant,
ladite étape (E1) étant conduite dans des conditions de température et de pression où ledit polymère reste sous forme solide et où ledit agent réticulant est au moins en partie (par exemple totalement) sous forme vapeur, ce par quoi on obtient une réticulation du polymère au sein des particules du solide divisé.

Suite à l'étape (E1), le procédé de l'invention comporte généralement une étape (E2) de récupération du solide obtenu à l'issue de l'étape (E1).

Le procédé de l'invention permet d'obtenir les agents de contrôle sous une forme solide, qui peut être remise ensuite en solution pour obtenir des fluides adaptés à une mise en œuvre dans le domaine de l'extraction pétrolière. Ces agents sous forme solide présentent l'avantage d'être plus aisées à stocker et à transporter en termes de volume et de poids que les compositions liquides correspondantes.

Par ailleurs, le procédé conduit à des agents de contrôle du filtrat qui sont sous une forme très aisée à formuler Ils peuvent par exemple être mélangés à sec avec d'autres ingrédients solide, stockées ou transportés sous forme de tels mélange et être employés sur le lieu de leur utilisation par simple mélange à de l'eau.

En outre, il s'avère que le procédé de l'invention nécessite en général moins d'agents réticulants que dans les procédés de l'état de la technique pour obtenir un même degré de réticulation, et ce notamment lorsque l'étape (E1) est conduite sur un PVA. A ce sujet, sans vouloir être lié par une théorie particulière, il semble pouvoir être avancé que la mise en œuvre de l'étape (E1) avec le polymère de type PVA spécifiquement à l'état solide semble conduire à une favorisation des réticulations intermoléculaires (utiles) par rapport aux réticulations intramoléculaire (sans effet). En d'autres termes, le procédé de l'invention semble conduire à une optimisation de l'utilisation des agents réticulant, ce qui peut notamment se traduire en termes de réduction de coûts.

L'étape (E1) du procédé de l'invention peut être conduite sur de nombreux polymères, sous réserve qu'il s'agisse de polymères porteurs de plusieurs groupes -OH et/ou amide susceptible de réagir avec l'agent de couplage.

Selon un mode de réalisation intéressant de l'invention, le polymère employé dans l'étape (E1) est un alcool polyvinylique (PVA). Alternativement, il peut s'agir d'un copolymère d'alcool polyvinylique et d'autres unités monomères, ces copolymères pouvant par exemple comprendre, en plus des unités alcool polyvinyliques, jusqu'à 30% molaire d'unités anioniques (comme des acides carboxyliques, des groupements sulfonates), des unités cationiques (comme des amines ou des ammonium quaternaires) ou des unités neutres (comme des unités vinylpyrrolidone).

Alternativement, le polymère de l'étape (E1) peut être un biopolymère hydroxylé, porteur de plusieurs groupes -OH, comme par exemple un guar ou bien encore une gomme xanthane.

Selon un autre mode de réalisation particulier, le polymère de l'étape (E1) est un polymère porteur de plusieurs fonctions amide, par exemple un polyacrylamide.

Selon un autre mode de réalisation particulier, le polymère de l'étape (E1) est un polymère porteur de plusieurs fonctions amine, par exemple un polyvinylamine ou polyéthyléneimine.

Quelle que soit la nature exacte du polymère employé dans l'étape (E1), ce polymère est mis en œuvre sous forme d'un solide divisé lors de cette étape. On entend par le terme « divisé » que le polymère est sous forme d'objets solides (particules, agrégats de particules, poudre ou granulats, ces objets pouvant être isotrope ou anisotrope, par exemple de type fibres ou fibrilles) dont la granulométrie est inférieure à 1 cm, avec une granulométrie moyenne typiquement comprise entre 1 micron et 100 microns pour les objets isotropes. Pour les objets anisotropes, la plus petite dimension (le diamètre dans le cas des fibres) est de préférence comprise entre 1 micron et 250 micron, par exemple entre 1 micron et 100 microns et la plus grande dimension reste de préférence inférieure à 1 cm.

L'agent réticulant employé dans l'étape (E1) est quant à lui un composé suffisamment volatil pour pouvoir être mis en œuvre sous forme vapeur dans l'étape (E1). Il s'agit typiquement d'un composé ayant un point d'ébullition inférieure ou égale à 150°C à pression atmosphérique. Des molécules ayant un point d'ébullition supérieur peuvent éventuellement être employées à titre d'agent réticulant dans l'étape (E1), sous pression réduite. Par ailleurs, un agent de vaporisation formant un azéotrope avec l'agent réticulant peut être utilisé pour diminuer avantageusement la température de vaporisation de ce dernier.

Les au moins deux groupements -R présents sur l'agent réticulant, et propres à former des liaisons covalentes par réaction avec les groupes -OH et/ou amine et/ou amide du polymère, peuvent être identiques ou différents. Ils sont le plus souvent, mais non nécessairement, identiques.

La nature de ces groupements -R peut varier en une large mesure.

Selon un mode de réalisation particulièrement intéressant, les groupes -R présents sur l'agent réticulant de l'étape (E1) sont des groupes aldéhyde -CHO. Dans ce cadre, selon une variante particulière, l'agent de réticulation employé est le glutaraldéhyde. Alternativement, l'agent de réticulation peut être un autre composé porteurs d'au moins deux fonctions aldéhydes, comme par exemple le glyoxal, le dialdehyde succinique, ou bien un mélange de composés porteurs de fonctions aldéhydes. Ces composés porteurs de groupes aldéhyde ont en général un point d'ébullition relativement faible.

Selon un autre mode de réalisation, les groupes -R présents sur l'agent réticulant de l'étape (E1) sont des groupes isocyanates. Généralement, ces composés sont moins volatils que les composés précités comportant des aldéhydes, et ils sont de préférence mis en œuvre sous pression réduite dans l'étape (E1). Parmi les isocyanates, on peut par exemple utiliser l'isophorone diisocyanate, l'hexamethylene diisocyanate , ou le toluène di-isocyanate , par exemple, qui, sous pression réduite, présente des points d'ébullition compatibles avec la mise en œuvre de l'étape (E1).

La réticulation obtenue dans l'étape (E1) peut être modulée en fonction du ratio massique de la masse totale d'agent réticulant employée dans l'étape (E1) rapporté à la masse totale du polymère avant la réticulation, désigné par « rapport massique agent réticulant/polymère ». Ce rapport peut varier en une assez large mesure en fonction du taux de réticulation recherché. Comme indiqué plus haut dans la présente description, le procédé de l'invention permet d'obtenir une réticulation efficace et nécessite de ce fait des quantités de réticulant qui sont généralement plus faibles que dans les procédés de l'état de la technique pour obtenir des effets similaires. Le plus souvent, des effets intéressants sont obtenus avec un rapport massique agent réticulant/polymère inférieur à 2%, par exemple entre 0,01 et 1%, notamment entre 0,1 et 0,5%. Ces rapports sont particulièrement bien adaptés notamment dans le cas où le polymère est un PVA et où le réticulant est un glutaraldéhyde. Ce rapport est en général à adapter à la masse molaire du polymère à réticuler, le taux de réticulation à atteindre étant en général d'autant plus faible que la masse molaire du polymère est élevée.

L'étape (E1) est typiquement réalisée au sein d'un réacteur confiné, qui permet d'optimiser la mise en contact entre le polymère à l'état solide et l'agent réticulant à l'état de vapeur.

Selon un mode de réalisation alternatif, l'étape (E1) peut être conduite en mettant en contact le polymère à l'état divisé avec un flux gazeux comprenant l'agent de réticulation.

Par ailleurs, la température de l'étape (E1) peut varier en une assez marge mesure en fonction de la nature exacte des composés mis en présence lors de l'étape (E1). Typiquement, l'étape (E1) est conduite à une température inférieure à 150°C, de préférence à une température supérieure à 50°C, par exemple entre 100 et 150°C. La température est à adapter en fonction de la plage de stabilité thermique des composés employés et des conditions imposées quant au caractère solide du polymère lors de l'étape (E1).

Selon un mode de réalisation particulier, l'étape (E1) est conduite en présence d'un catalyseur propre à activer la réaction entre les groupe -R de l'agent réticulant et les groupes -OH ou amide du polymère. Dans ce cas, le catalyseur est le plus souvent mis en œuvre sous forme de vapeur (gaz) lors de l'étape (E1).

Ainsi, lorsque l'agent de couplage est porteur de groupe aldéhyde par exemple (notamment lorsqu'il s'agit de glutaraldéhyde), l'étape (E1) est avantageusement mise en œuvre en présence d'un acide organique, par exemple l'acide acétique, mis en œuvre sous forme vapeur.

Selon une variante particulière (variante 1), l'étape (E1) du procédé de l'invention est conduite en réalisant d'abord un mélange du polymère sous forme d'un solide divisé avec un second solide divisé comprenant l'agent réticulant, puis en portant ce mélange dans les conditions de conditions de température et de pression où le polymère reste sous forme solide et où ledit agent réticulant est au moins en partie sous forme vapeur (le catalyseur, le cas échéant, étant de préférence lui aussi au moins en partie sous forme vapeur). Selon cette variante, le second solide divisé qui est mélangé avec le polymère sous forme solide peut par exemple être :
- un solide contenant l'agent réticulant sous forme solide, ce solide pouvant éventuellement comprendre en outre un catalyseur du type précité, sous forme solide ou liquide ;
   ou
- un solide contenant l'agent réticulant sous forme liquide déposé sur un support solide, par exemple sur des particules de silice, ce solide pouvant éventuellement comprendre en outre un catalyseur du type précité, sous forme solide ou liquide.

Selon une autre variante particulière (variante 2), l'étape (E1) du procédé de l'invention est conduite en injectant l'agent de réticulation sous forme liquide au sein d'un réacteur confiné au sein duquel règnent des conditions de température et de pression où ledit polymère reste sous forme solide et où ledit agent réticulant est au moins en partie sous forme vapeur, ce par quoi l'agent de réticulation, introduit sous forme liquide, se vaporise au sein du réacteur. Selon cette variante, on peut éventuellement co-injecter un catalyseur du type précité, à l'état liquide, lors de l'injection de l'agent de réticulation (typiquement, on peut, pour ce faire, injecter dans le réacteur une composition liquide comprenant en mélange l'agent réticulant et le catalyseur, ou bien co-injecter deux compositions liquides comprenant pour l'une l'agent réticulant et pour l'autre le catalyseur).

Les deux variantes du procédé telles que définies ci-dessus (variantes 1 et 2) se révèlent généralement très intéressantes notamment en ce qu'elles conduisent à une distribution optimisée de l'agent réticulant lors de l'étape (E1). Elles permettent en outre, le plus souvent, une prévention de l'agglomération interparticulaire entre les particules de polymère.

Selon un aspect particulier, la présente description a pour objet les agents de contrôle du filtrat sous forme solide du type obtenus selon l'étape (E1) précitée.

Le procédé de l'invention permet, de synthétiser des agents de contrôle sous forme d'un solide divisé présentant une granulométrie modulable. La granulométrie de l'agent de contrôle solide à l'issue de l'étape (E1) est sensiblement celle du polymère employé à l'état solide. En effet, le plus souvent, la réticulation opérée par la réaction de l'agent de réticulation lors de l'étape (E1) n'affecte pas la granulométrie.

Il est à noter que le procédé de l'invention permet non seulement d'obtenir directement des agents de contrôle directement à l'état solide, ce qui représente un intérêt indéniable en matière de procédé, mais permet également d'accéder à des granulométries plus spécifiques (notamment plus resserrées et mieux définies) que celles atteintes par séchage d'agent de contrôle obtenus par les méthodes décrites dans les demandes de brevet FR2704219 ou FR2759364. En fait, l'étape (E1) du procédé de l'invention conduit à un agent de contrôle sous forme solide ayant une granulométrie sensiblement similaire (et généralement identique) à celle de la granulométrie du polymère solide mis en œuvre dans cette étape.

Par ailleurs, comme indiqué précédemment, les agents de contrôle préparés selon l'invention présentent le plus souvent une structure réticulée spécifique, distincte notamment de celle qui est obtenue en employant les méthodes de réticulation en phase aqueuse décrites dans l'état de la technique.

Les agents de contrôle solides obtenus selon l'invention, facilement stockables, transportables et formulables, peuvent être incorporés dans des fluides aqueux utiles pour l'extraction pétrolière. Typiquement, ces agents de contrôle selon l'invention ont un impact réduit (voire aucun impact significatif) sur la rhéologie du coulis de ciment, notamment plus réduit que celui de polymère ayant une structure non réticulée.

Les agents de contrôle obtenus selon la présente invention se révèlent notamment utiles à titre d'agents de contrôle de la perte de fluide (« *fluid loss* »), et/ou ils peuvent également être employés à titre d'agents inhibiteur de migration de gaz, dans des compositions fluides, notamment aqueuses, pour application pétrolière. Plus spécifiquement, ils peuvent être utilisés pour améliorer les propriétés de contrôle du filtrat et/ou de migration de gaz d'un coulis de ciment pétrolier (composition de cimentation), d'un fluide de forage pour application pétrolière ou d'un fluide de fracturation hydraulique ou d'un fluide de complétion ou de diversion (ou de modification de perméabilité relative) tel que mis en œuvre par exemple dans les procédés décrits dans WO2006/024795 et US 6,984,705. Ces applications particulières constituent un autre objet particulier de la présente description.

Selon un mode de réalisation particulier, l'étape (E1) du procédé de l'invention est suivie d'une étape (E3), où le solide obtenu à l'issue de l'étape (E1) est mélangé à d'autres composés solides.

Avantageusement, cette étape (E3) est conduite en mélangeant le solide obtenu à l'issue de l'étape (E1) avec d'autres ingrédients solides propres à former un fluide utile dans le domaine de l'extraction pétrolière, par exemple un coulis de ciment pétrolier, ou bien encore un fluide de forage ou de fracturation pour application pétrolière auquel cas le solide obtenu à l'issue de l'étape (E1) est mélangé avec des constituants solides de coulis pétrolier. Alternativement, dans l'étape (E3), le solide obtenu à l'issue de l'étape (E1) est mélangé à des additifs pour fluide de forage ou pour fluide de fracturation.

Les mélanges de constituants solides obtenus à l'issus de l'étape (E3), désignés également par le terme de «*pré-mélange*» («*blend*» ou «*pre-blends*», en anglais) sont typiquement des pré-mélanges solide pour la fabrication d'un fluide utile dans le domaine de l'extraction pétrolière. Ils constituent un moyen très aisé de transporter les constituants d'une composition de type coulis de ciment pétrolier, d'un fluide de forage pour application pétrolière ou d'un fluide de fracturation pour application pétrolière, sous une forme pré-dosée, prête à l'emploi, qu'il suffit de mélanger à un fluide (eau de mer ou de rivière, par exemple) sur le site d'utilisation. Ces mélanges spécifiques auxquels donne accès les constituants solides obtenus à l'issus de l'étape (E1), constituent, selon un autre aspect, un autre objet particulier de la description.

Différents aspects et avantages de l'invention seront encore illustrés par les exemples ci-après dans lesquels des polymères ont été préparés selon le procédé de l'invention.

### Exemple 1 : préparation d'un agent A1 selon l'invention

Un agent selon l'invention a été préparé dans les conditions suivantes :
Un alcool polyvinylique de grade Celvol E 26/88 (Sekisui), disponible commercialement sous forme de granules, a été broyé pour être mis sous la forme d'une poudre. Cette poudre est tamisée et la fraction comprise entre les tamis de 40 et de 100 µm est utilisée ici et notée (P).

Parallèlement, on a préparé une composition solide (C) en absorbant une solution aqueuse de glutaraldéhyde et d'acide acétique sur de la silice poreuse (silice Tixosil 38X commercialisée par Rhodia). Cette composition (C) qui contient 20% de glutaraldéhyde a été obtenue en additionnant sous agitation une solution comprenant du glutaraldéhyde à 50% dans l'eau et de l'acide acétique à de la silice. La composition finale en poids de la composition (C) est :
56% de silice Tixosil 38X
40% d'une solution aqueuse de glutaraldéhyde à 50% en masse ; et
4% d'acide acétique.

20g de poudre (P) et 1 g de la composition (C) ont été mélangées intimement, puis le mélange obtenu a été placé dans une cellule téflonée fermée hermétiquement (cellule de digestion acide de modèle 4748 fourni par Parr Instruments company et ci-après désignée par « bombe de Parr ») et a été mis en rotation dans une étuve à rouleaux (« rolling oven » en anglais) et porté pendant 5 heures à 120°C dans ce réacteur confiné.

A l'issue de cette réaction, on a obtenu une poudre qui a été placée dans un four ventilé à 60°C pour en éliminer l'eau, l'acide acétique et l'éventuel excès de glutaraldéhyde, ce par quoi on a obtenu l'agent A1 sous forme d'un solide pulvérulent (granulométrie de l'ordre de 40 à 100 microns).

### Exemple 2 : préparation d'un agent A2 selon l'invention

Un agent selon l'invention a été préparé dans mêmes conditions que dans l'exemple 1, à la différence que le mélange introduit dans la bombe de Parr contient 20g de poudre (P) et 1,15 g de la composition (C), ce par quoi on a obtenu l'agent A2 sous forme d'un solide pulvérulent (granulométrie de l'ordre de 40 à 100 microns).

### Exemple 3 : Evaluation des agents A1 et A2 dans des coulis de ciment

Chacun des deux agents A1 et A2 préparés dans les exemples 1 et 2 a été utilisé pour réaliser un coulis de ciment pétrolier ayant la même formulation suivante :

| | |
|---|---|
| Eau de ville : | 334,4 g |
| Agent dispersant (polymélamine sulfonate) : | 8,6 g |
| Agent retardant (lignosulfonate de calcium) : | 4,4 g |
| Anti-mousse organique : | 2,1 g |
| Ciment Dykheroff black label (API Class G) : | 781,5 g |
| Agent (A1 ou A2) : | 5g |

Le ciment et l'agent A1 ou A2 sont prémélangés, sous forme solide avant dispersion dans les liquides.

La formulation et le test de filtration sont réalisés selon la norme de l'American Petroleum Institute (API recommended practice for testing well cements 10B, 22nd edition Dec 1997). Après mélange et dispersion de l'ensemble des constituants de la formulation, le coulis obtenu est conditionné à 88°C pendant 20 minutes dans un consistomètre atmosphérique (modèle 1250 fourni par Chandler Engineering Inc.) préalablement stabilisé à cette température, ce qui permet de simuler les conditions subies par le coulis de ciment lors de la descente dans un puits.

La viscosité des différentes formulations est déterminée au moyen d'un viscosimètre de type Chan 35 (fourni par Chandler Engineering Inc.). Les valeurs de viscosité « plastique » (PV) et de seuil d'écoulement (Ty) sont calculées en appliquant la méthode des « 2 points » considérant le coulis de ciment comme un fluide de Bingham.

La performance en contrôle de filtrat est déterminée par une filtration statique à 88°C dans une cellule double ouverture de capacité 175mL équipée de grille métallique 325meshx60mesh (fourni par OFITE Inc., référence 170-45). Les performances des additifs A1 et A2 dans les formulations de ciment sont reportées dans le tableau ci-dessous :

| Agent employé | A1 | A2 | Poudre (P) initiale |
|---|---|---|---|
| Vol API (mL après 30mn sous 70bars) | 52 | 41 | 590 (calc.) |
| PV (cP) 20°C | 72 | 78 | 54 |
| Ty (lb/100ft2) 20°C | 2 | 0 | 1 |
| PV (cP) 88°C | 41 | 45 | 51 |
| Ty (lb/100ft2) 88°C | 5 | 8 | 9 |

Les additifs A1 et A2 tout en n'ayant pas d'impact significatif sur la rhéologie du coulis de ciment, permettent de contrôler le filtrat de façon efficace.

### Exemple 4 : préparation d'un agent A3 selon l'invention

Un agent selon l'invention a été préparé dans les conditions suivantes :
Une poudre (P) de xanthane de grade Rhodopol 23P (Rhodia) disponible commercialement est utilisée ici.

Le glutaraldéhyde préalablement absorbé sur de la silice pour être utilisé sous forme de composition (C) identique à celle de l'exemple 1.

20g de poudre (P) et 0.25 g de la composition (C) ont été mélangées intimement, puis le mélange obtenu a été placé dans une bombe de Parr fermée hermétiquement et a été mis en rotation dans une étuve à rouleaux et porté pendant 5 heures à 120°C dans ce réacteur confiné.

A l'issue de cette réaction, on a obtenu une poudre qui a été placée dans un four ventilé à 60°C pour en éliminer l'eau, l'acide acétique et l'éventuel excès de glutaraldéhyde, ce par quoi on a obtenu l'agent A3 sous forme d'un solide pulvérulent.

### Exemple 5 : préparation d'un agent A4 selon l'invention

Un agent de xanthane réticulée selon l'invention a été préparé dans mêmes conditions que dans l'exemple 4, à la différence que le mélange introduit dans la bombe de Parr contient 20g de poudre (P) et 0,5 g de la composition (C), ce par quoi l'agent A4 est obtenu sous forme d'un solide pulvérulent.

### Exemple 6 : Evaluation des agents A3 et A4 dans un fluide de forage (ou de fracturation hydraulique)

Chacun des deux agents A3 et A4 préparés dans les exemples 4 et 5 a été utilisé pour réaliser une boue de forage simplifiée de formule suivante

| | |
|---|---|
| Eau | 400g |
| Chlorure de potassium | 8g |
| Xanthane (Rhodopol 23P) | 1.2g |
| Agent (A3, A4 ou xanthane non modifiée) | 0.8g |

La formulation et le test de filtration sont réalisés selon la norme de l'American Petroleum Institute (API 13B-1 « Recommended practice for field testing water-based drilling fluids » 3rd edition Dec 2003). Après mélange et dispersion de l'ensemble des constituants de la formulation, le coulis obtenu est conditionné à 80°C pendant 20 minutes dans un consistomètre atmosphérique (modèle 1250 fourni par Chandler Engineering Inc.) préalablement stabilisé à cette température, ce qui permet de simuler les conditions subies par le fluide de forage lors de la descente dans un puits.

La viscosité des différentes formulations est déterminée au moyen d'un viscosimètre de type Chan 35 (fourni par Chandler Engineering Inc.). Les valeurs de viscosité « plastique » (PV) et de seuil d'écoulement (Ty) sont calculées en appliquant la méthode des « 2 points » considérant le coulis de ciment comme un fluide de Bingham.

La performance en contrôle de filtrat est déterminée par une filtration statique à 80°C dans une cellule simple ouverture de capacité 175mL équipée d'un papier filtre (fourni par OFITE Inc., référence 170-12-1).

| Agent employé | A3 | A4 | Xanthane non modifiée |
|---|---|---|---|
| Volume filtré après 30mn sous 35bars | 35 | 29 | 87 |
| PV (cP) 80°C | 10 | 10 | 14 |
| Ty (lb/100ft2) 80°C | 7 | 7 | 13 |

Les additifs A3 et A4 tout en n'ayant pas d'impact significatif sur la rhéologie de la boue de forage, démontrent une bonne performance en tant qu'agent de contrôle de filtrat.

### Exemple 7 : préparation d'un agent A5 selon l'invention

Un agent selon l'invention a été préparé dans les conditions suivantes :
Un alcool polyvinylique de grade Celvol E26/88 a été broyé pour être mis sous forme de poudre de diamètre médian de 140 µm (noté P').

La composition solide (C) dont la préparation est décrite dans l'exemple 1 est utilisée ici.

Dans un mélangeur à solide hermétique équipé d'un agitateur de type soc de charrue et d'une double enveloppe pour le contrôle de la température, sont introduits 1.5 kg de poudre (P') et 30g de la composition (C). Le mélange est maintenu sous agitation pendant 5 heures à une température de 120°C.

A l'issue de cette réaction, la poudre obtenue est placée dans un four ventilé à 60°C pour en éliminer l'eau, l'acide acétique et l'éventuel excès de glutaraldéhyde. L'agent A5 ainsi obtenu sous forme d'un solide pulvérulent dont le rapport massique de glutaraldéhyde introduit sur la poudre P' est de 0.4%.

### Exemple 8 : évaluation de l'agent A5 dans des coulis de ciment

L'agent A5 préparé dans l'exemple 7 a été utilisé pour réaliser un coulis de ciment pétrolier ayant la même formulation que dans l'exemple 3.

Le protocole suivi pour la préparation, le conditionnement et le test des coulis est identique à celui décrit dans l'exemple 3.

| Agent employé | A5 | Poudre (P') |
|---|---|---|
| Glutaraldehyde introduit / P' | 0.4% | 0 |
| Vol API (mL après 30mn sous 70bars) | 26 | 588 (calc.) |
| PV (cP) 20°C | 45 | 55 |
| Ty (lb/100ft2) 20°C | 0 | 1 |
| PV (cP) 88°C | 68 | 50 |
| Ty (lb/100ft2) 88°C | 8 | 9 |

L'additif A5 tout en n'ayant pas d'impact significatif sur la rhéologie du coulis de ciment, permet de contrôler le filtrat de façon efficace.

## Revendications

1. Procédé de préparation d'un agent de contrôle du filtrat, sous forme solide, comprenant une étape (E1) où on fait réagir un polymère porteur de plusieurs fonctions -OH et/ou amine et/ou amide, sous forme d'un solide divisé, avec au moins un agent réticulant porteur d'au moins deux groupements -R capable de réagir avec les groupes -OH, amine, ou amide dudit polymère dans les conditions de l'étape (E1) pour former une liaison covalente entre le polymère et l'agent réticulant,
ladite étape (E1) étant conduite dans des conditions de température et de pression où ledit polymère reste sous forme solide et où ledit agent réticulant est au moins en partie sous forme vapeur, ce par quoi on obtient une réticulation du polymère au sein des particules du solide divisé.

2. Procédé selon la revendication 1, le polymère employé dans l'étape (E1) est un alcool polyvinylique (PVA).

3. Procédé selon la revendication 1 ou 2, où les au moins deux groupements -R présents sur l'agent réticulant et propres à former des liaisons covalentes par réaction avec les groupes -OH et/ou amide du polymère sont des groupes aldéhyde -CHO.

4. Procédé selon la revendication 3, où l'agent de réticulation est le glutaraldéhyde.

5. Procédé selon l'une des revendications 1 à 3, où le rapport massique agent réticulant/polymère est inférieur à 2%, par exemple entre 0,01 et 1.

6. Procédé selon l'une des revendications précédentes, où l'étape (E1) propre à activer la réaction entre les groupe -R de l'agent réticulant et les groupes -OH ou amide du polymère est conduite en présence d'un catalyseur, le catalyseur étant de préférence mis en œuvre sous forme de vapeur lors de l'étape (E1).

7. Procédé selon l'une des revendications 1 à 6, où l'étape (E1) du procédé de l'invention est conduite en réalisant d'abord un mélange du polymère sous forme d'un solide divisé avec un second solide divisé comprenant l'agent réticulant, puis en portant ce mélange dans les conditions de conditions de température et de pression où le polymère reste sous forme solide et où ledit agent réticulant est au moins en partie sous forme vapeur, ledit second solide divisé étant :
- un solide contenant l'agent réticulant sous forme solide ;
ou
- un solide contenant l'agent réticulant sous forme liquide déposé sur un support solide.

8. Procédé selon l'une des revendications 1 à 6, où l'étape (E1) est conduite en injectant l'agent de réticulation sous forme liquide au sein d'un réacteur confiné au sein duquel règnent des conditions de température et de pression où ledit polymère reste sous forme solide et où ledit agent réticulant est au moins en partie sous forme vapeur, ce par quoi l'agent de réticulation, introduit sous forme liquide, se vaporise au sein du réacteur.

9. Procédé selon l'une des revendications 1 à 8, où l'étape (E1) est conduite à une température inférieure à 150°C, de préférence à une température supérieure à 50°C, par exemple entre 100 et 150°C.

10. Procédé selon l'une des revendications 1 à 9, qui comporte en outre une étape (E2) de récupération du solide obtenu à l'issue de l'étape (E1).

11. Procédé selon l'une des revendications 1 à 9, où l'étape (E1) est suivie d'une étape (E3), où le solide obtenu à l'issue de l'étape (E1) est mélangé à d'autres composés solides propres à former un fluide utile dans le domaine de l'extraction pétrolière, par exemple des constituants solides de coulis pétrolier, des additifs pour fluide de forage ou des additifs pour fluide de fracturation, ce par quoi on obtient un pré-mélange solide pour la fabrication d'un fluide utile dans le domaine de l'extraction pétrolière.

## Patentansprüche

1. Verfahren zum Herstellen eines Mittels zur Beherrschung des Fluidverlusts, in feststofflicher Form, wobei es einen Schritt (E1) umfasst, in welchem ein Polymer, das mit mehreren OH- und/oder Amin- und/oder Amidfunktionen versehen ist, wobei es in Form eines verteilten Feststoffs vorliegt, unter den Bedingungen des Schrittes (E1) mit mindestens einem Vernetzungsmittel umgesetzt wird, das mit mindestens zwei R-Gruppen versehen ist, welche dazu befähigt sind, mit den OH-, Amin- oder Amidgruppen des Polymers zu reagieren, um eine kovalente Bindung zwischen dem Polymer und dem Vernetzungsmittel zu bilden,
wobei der Schritt (E1) unter Temperatur- und Druckbedingungen durchgeführt werden, bei welchen das Polymer in feststofflicher Form bleibt und bei welchen das Vernetzungsmittel zumindest teilweise in Form von Dampf vorliegt, um auf diese Weise eine Vernetzung des Polymers innerhalb der Partikel des verteilten Feststoffs zu erzielen.

2. Verfahren nach Anspruch 1, wobei es sich bei dem Polymer, welches in Schritt (E1) eingesetzt wird, um einen Polyvinylalkohol (PVA) handelt.

3. Verfahren nach Anspruch 1 oder 2, wobei es sich bei den mindestens zwei R-Gruppen, mit welchen das Vernetzungsmittel versehen ist und welche dazu geeignet sind, durch Umsetzung mit den OH- / und/oder Amidgruppen des Polymers kovalente Bindungen zu bilden, um Aldehydgruppen -CHO handelt.

4. Verfahren nach Anspruch 3, wobei es sich bei dem Vernetzungsmittel um Glutaraldehyd handelt.

5. Verfahren nach einem der Ansprüche 1 bis 3, wobei das Massenverhältnis von Vernetzungsmittel/Polymer weniger als 2 % beträgt, beispielsweise zwischen 0,01 und 1.

6. Verfahren nach einem der vorhergehenden Ansprüche, wobei der Schritt (E1), welcher dazu geeignet ist, die Reaktion zwischen den R-Gruppen des Vernetzungsmittels und den OH- oder Amidgruppen des Polymers zu aktivieren, in Gegenwart eines Katalysators durchgeführt wird, wobei der Katalysator vorzugsweise während des Schrittes (E1) in Form von Dampf eingesetzt wird.

7. Verfahren nach einem der Ansprüche 1 bis 6, wobei der Schritt (E1) des Verfahrens der Erfindung durchgeführt wird, indem zuerst ein Gemisch des Polymers in Form eines verteilten Feststoffs mit einem zweiten verteilten Feststoff hergestellt wird, welcher das Vernetzungsmittel umfasst, woraufhin dieses Gemisch auf Temperatur- und Druckbedingungen gebracht wird, bei welchen das Polymer in feststofflicher Form bleibt und bei welchen das Vernetzungsmittel zumindest teilweise in Form von Dampf vorliegt, wobei es sich bei dem zweiten verteilten Feststoff um Folgendes handelt:
- einen Feststoff, der das Vernetzungsmittel in feststofflicher Form enthält;
oder
- einen Feststoff, der das Vernetzungsmittel in flüssiger Form enthält, wobei es auf einen feststofflichen Träger aufgebracht ist.

8. Verfahren nach einem der Ansprüche 1 bis 6, wobei der Schritt (E1) durchgeführt wird, indem das Vernetzungsmittel in flüssiger Form in einen fest verschlossenen Reaktor eingespritzt wird, innerhalb dessen Temperatur- und Druckbedingungen herrschen, bei welchen das Polymer in feststofflicher Form bleibt und bei welchen das Vernetzungsmittel zumindest teilweise in Form von Dampf vorliegt, sodass das Vernetzungsmittel, welches in flüssiger Form eingeleitet wird, im Inneren des Reaktors verdampft.

9. Verfahren nach einem der Ansprüche 1 bis 8, wobei der Schritt (E1) bei einer Temperatur von weniger als 150 °C, vorzugsweise bei einer Temperatur von mehr als 50 °C, durchgeführt wird, beispielsweise zwischen 100 und 150 °C.

10. Verfahren nach einem der Ansprüche 1 bis 9, wobei es darüber hinaus einen Schritt (E2) des Gewinnens des Feststoffs aufweist, welcher nach Abschluss des Schrittes (E1) erhalten wird.

11. Verfahren nach einem der Ansprüche 1 bis 9, wobei auf den Schritt (E1) ein Schritt (E3) folgt, in welchem der Feststoff, wie er nach Abschluss des Schrittes (E1) erhalten wird, mit weiteren feststofflichen Verbindungen vermischt wird, die dazu geeignet sind, ein Fluid zu bilden, welches auf dem Gebiet der Erdölförderung von Nutzen ist, beispielsweise mit feststofflichen Bestandteilen von Schlempe für Ölförderanwendungen, mit Additiven für Bohrspülungen oder mit Additiven für Frakturierungsfluide, um auf diese Weise eine feststoffliche Vormischung für die Herstellung eines Fluids zu erhalten, welches zweckmäßigerweise auf dem Gebiet der Erdölförderung verwendet werden kann.

## Claims

1. Process for the preparation of a fluid loss control agent, in solid form, comprising a stage (E1) where a polymer carrying several -OH and/or amine and/or amide functional groups, in the form of a divided solid, is reacted with at least one crosslinking agent carrying at least two -R groups capable of reacting with the -OH, amine or amide groups of said polymer under the conditions of stage (E1) in order to form a covalent bond between the polymer and the crosslinking agent,
said stage (E1) being carried out under temperature and pressure conditions where said polymer remains in the solid form and where said crosslinking agent is at least partially in the vapor form, whereby a crosslinking of the polymer within the particles of the divided solid is obtained.

2. Process according to Claim 1, where the polymer employed in stage (E1) is a polyvinyl alcohol (PVA).

3. Process according to Claim 1 or 2, where the at least two -R groups present on the crosslinking agent and suitable for forming covalent bonds by reaction with the -OH and/or amide groups of the polymer are aldehyde -CHO groups.

4. Process according to Claim 3, where the crosslinking agent is glutaraldehyde.

5. Process according to one of Claims 1 to 3, where the crosslinking agent/polymer ratio by weight is less than 2%, for example between 0.01% and 1%.

6. Process according to one of the preceding claims, where stage (E1) suitable for activating the reaction between the -R groups of the crosslinking agent and the -OH or amide groups of the polymer is carried out in the presence of a catalyst, the catalyst preferably being employed in the vapor form during stage (E1).

7. Process according to one of Claims 1 to 6, where stage (E1) of the process of the invention is carried out by first producing a blend of the polymer in the form of a divided solid with a second divided solid comprising the crosslinking agent and by then holding this blend under the temperature and pressure conditions where the polymer remains in the solid form and where said crosslinking agent is at least partially in the vapor form, said second divided solid being:
- a solid comprising the crosslinking agent in the solid form;
or
- a solid comprising the crosslinking agent in the liquid form deposited on a solid support.

8. Process according to one of Claims 1 to 6, where stage (E1) is carried out by injecting the crosslinking agent in the liquid form within a confined reactor within which temperature and pressure conditions prevail where said polymer remains in the solid form and where said crosslinking agent is at least partially in the vapor form, whereby the crosslinking agent, introduced in the liquid form, vaporizes within the reactor.

9. Process according to one of Claims 1 to 8, where stage (E1) is carried out at a temperature of less than 150°C, preferably at a temperature of greater than 50°C, for example between 100 and 150°C.

10. Process according to one of Claims 1 to 9, which additionally comprises a stage (E2) of recovery of the solid obtained on conclusion of stage (E1).

11. Process according to one of Claims 1 to 9, where stage (E1) is followed by a stage (E3), where the solid obtained on conclusion of stage (E1) is blended with other solid compounds suitable for forming a fluid of use in the field of oil extraction, for example solid oil grout constituents, drilling fluid additives or fracturing fluid additives, whereby a solid preblend for the manufacture of a fluid of use in the field of oil extraction is obtained.
